# EUROPÄISCHE PATENTANMELDUNG

(11) **EP 1 278 002 A2**
(43) Veröffentlichungstag der Anmeldung: **22.01.2003**
(21) Anmeldenummer: 02077891.6
(22) Anmeldetag: 15.07.2002
(51) Int. Cl.: F16L 21/00, F16L 17/04

(54) **Rohrkupplung**

(30) Priorität: 20.07.2001 NL 1018598
(71) Anmelder: J. van Walraven B.V., 3641 RK Mijdrecht (NL)
(72) Erfinder: van Walraven, Jan, 3641 GP Mijdrecht (NL)
(74) Vertreter: Brookhuis, Hendrik Jan Arnold

(57) **Zusammenfassung**

Eine Rohrkupplung zum abdichtenden Verbinden zweier Rohre mit glattzylindrischen Enden, zum Beispiel Abflussrohre.

Die Rohrkupplung umfasst eine spannbare ringförmige Manschette (2), die an zumindestens einer Stelle geteilt ist, und ein ringförmiges elastisches Dichtelement (5), um das die Manschette (2) herumgespannt wird.

Das Dichtelement hat an seinem Innenumfang eine radial hineinragende Anschlagsicke (6) mit einander gegenüberliegenden Anschlagflächen (7,8) für die Stirnenden der Rohre.

Das Dichtelement hat weiter an beiden Seiten der Anschlagsicke (6) jeweils ein erstes und ein zweites Aufnahmeteil (9,10) zum Aufnehmen eines Rohrendes.

Die Rohrkupplung umfasst weiter eine Spanneinrichtung zum Herumspannen der Manschette (2) um die im Dichtelement (5) aufgenommenen Rohrenden.

## Beschreibung

Die vorliegende Erfindung betrifft eine Rohrkupplung nach dem Oberbegriff des Anspruchs 1. Die abdichtend zu verbindenden Rohrenden sind insbesondere glattzylindrische oder unprofilierte Enden und können zum Beispiel ein Teil von geraden Rohren oder Bogenstücken, T-Stücken, usw. sein. Die Rohre sind zum Beispiel aus Metall, Gusseisen, Keramik, Glas oder Kunststoff. Insbesondere ist in der Anwendung der Rohrkupplung bei Abflussrohren, insbesondere aus Gusseisen vorgesehen.

Rohrkupplungen des Typs nach dem Oberbegriff des Anspruchs 1 sind allgemein bekannt. Hierbei ist die spannbare Manschette leicht vom Dichtelement zu entfernen.

Die Rohrkupplungen des Typs nach dem Oberbegriff des Anspruchs 1 werden zum Beispiel bei der Erneuerung von Rohrleitungen, insbesondere von Abflussleitungen eingesetzt. Dabei ist es oft erwünscht, dass ein Rohrteil entfernt wird, und ein neues oder anderes Rohrteil in die bestehende Rohrleitung eingesetzt wird. Der Monteur kann jetzt das Dichtelement mit dessen erstem Aufnahmeteil auf ein Rohrende montieren und dann das zweite Aufnahmeteil manuell mit der Innenseite nach außen kehren, in solcher Weise, dass das zweite Aufnahmeteil über der Außenseite des ersten Aufnahmeteils zu liegen kommt.

Anschließend können die zu kuppelnden Rohrenden fluchtend gemacht werden, so dass die freie Anschlagfläche der Anschlagsicke gegenüber dem Stirnende des noch zu kuppelnden Rohrendes liegt. Danach wird das zweite Aufnahmeteil über das betreffende Rohrende zurückgefaltet, und die Manschette mit Hilfe der Spanneinrichtung montiert und gespannt.

Neben dem obenbeschriebenen Rohrkupplungstyp gibt es auch einen Rohrkupplungstyp, bei dem die Rohrenden jeweils in ein zugehöriges Aufnahmeteil der Rohrkupplung gesteckt werden, ohne ein oder beide Aufnahmeteile zuerst umzufalten. Es wird deutlich sein, dass dieser Rohrkupplungstyp nicht für das obenbeschriebene Erneuerungsverfahren geeignet ist. Nach dem Einstecken der beiden Rohrenden in die Rohrkupplung wird die Manschette um die Aufnahmeteile, mit darin die Rohrenden, gespannt. Die vorliegende Erfindung bezieht sich nicht auf derartige Rohrkupplungen des "Einstecktyps".

Die Montage der bekannten Rohrkupplungen nach dem Oberbegriff des Anspruchs 1 verläuft in der Praxis öfter mühsam. Namentlich stellt sich heraus, dass das Umkehren des Aufnahmeteils nicht nach Wunsch verläuft.

Der vorliegenden Erfindung liegt die Aufgabe zugrunde, eine verbesserte Rohrkupplung des eingangs genannten Typs te schaffen, so dass das obengenannte Problem gelöst wird.

Die vorliegende Erfindung schafft eine Rohrkuppung nach dem Oberbegriff des Anspruchs 1, die dadurch gekennzeichnet ist, dass jedes Aufnahmeteil über eine ringförmige Sollbiegezone an den Außenumfang der Anschlagsicke anschließt, welche Sollbiegezone sich - in axiale Richtung vom freien Endes des Aufnahmeteils zur Anschlagsicke gesehen - vorbei an der freien Anschlagfläche der Anschlagsicke erstreckt, in solcher Weise, daß beim Umkehren eines Aufnahmeteils, dessen Biegung sich in der Sollbiegezone konzentriert, und das betreffende Aufnahmeteil in axiale Richtung gesehen in gleicher Höhe als, oder hinter der freien Anschlagfläche der Anschlagsicke zu liegen kommt.

Wie der kennzeichnende Teil des Anspruchs 1 bereits verdeutlicht, ist das Dichtelement jetzt in solcher Weise ausgeführt, dass die Biegung sich in der Sollbiegezone konzentriert, wenn das zugehörige Aufnahmeteil manuell oder mit einem geeigneten Werkzeug mit der Innenseite nach außen gekehrt wird. Die Anwesenheit und die Stelle der Biegezone erleichtert das Umkehren und bewirkt, dass das noch zu montierende Rohr leicht an die freie Anschlagfläche der Anschlagsicke gestellt werden kann. Auch das Zurückfalten des Aufnahmeteils wird durch die erfindungsgemäße Ausbildung erleichtert.

Die Sollbiegezonenkönnen, wie hervorgeht aus den Unteransprüchen und der nachfolgenden Beschreibung, in der anhand der Zeichnung einige Ausführungsbeispiele erläutert werden, auf verschiedene Weisen erhalten werden.

In der Zeichnung zeigt:
- Fig. 1: im Querschnitt schematisch ein erstes Ausführungsbeispiel der erfindungsgemäßen Rohrkupplung,
- Fig. 2: in einer der Figur 1 entsprechenden Ansicht das Dichtelement,
- Fig. 3: in einer der Figur 2 entsprechenden Ansicht das Dichtelement mit einem der Aufnahmeteile mit der Innenseite nach außen gekehrt,
- Fig. 4a: in einer der Figur 2 entsprechenden Ansicht ein zweites Ausführungsbeispiel des Dichtelements,
- Fig. 4b: eine Ausschnittsvergrößerung der Figur 4,
- Fig. 5: in einer der Figur 2 entsprechenden Ansicht ein drittes Ausführungsbeispiel des Dichtelements, und
- Fig. 6: in einer der Figur 4b entsprechenden Ansicht eine bevorzugte Abwandlung des Dichtelements der erfindungsgemäßen Rohrkupplung.

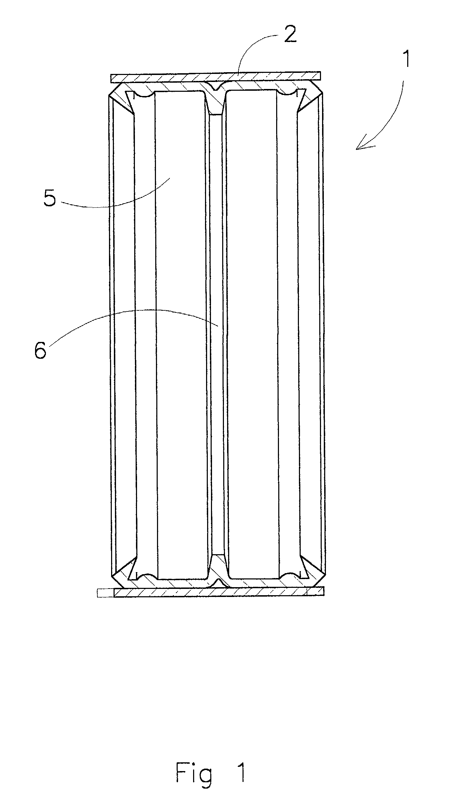

Fig. 1 zeigt eine Rohrkupplung zum abdichtenden Verbinden zweier Rohrenden, insbesondere glattzylindrischer Rohrenden, zum Beispiel von geraden Rohren, Bogenstücken, T-Stücken, usw.

Die Rohrkupplung 1 umfasst eine spannbare, ringförmige Manschette 2, die an einer Stelle um den Umfang geteilt ist. Vorzugsweise ist die Manschette 2 aus Metall, insbesondere rostbeständigem Stahl.

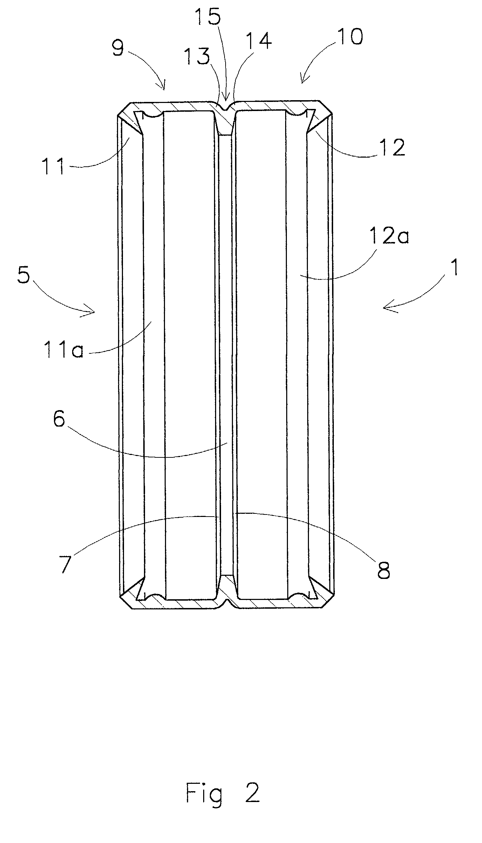

Die Rohrkupplung umfasst weiter ein ringförmiges, elastisches Dichtelement 5, um das die metallene Manschette 2 herumgespannt wird. Das Dichtelement 5 ist im Detail in Figur 2 gezeigt. Vorzugsweise ist das Dichtelement 5 aus einem Elastomer oder Gummimaterial, zum Beispiel EPDM, hergestellt.

In der Zeichnung ist nicht dargestellt, dass die Rohrkupplung 1 bei der Teilung im Umfang der Manschette 2 mit einer Spanneinrichting, zum Beispiel einem oder mehreren Spannbolzen, versehen ist, damit die Manschette 2 um die in dem Dichtelement 5 aufgenommenen Rohrenden gespannt werden kann.

Wie Figur 1 bereits zeigt, ist die spannbare Manschette 2 leicht vom Dichtelement 5 zu entfernen, wenn die Spanneinrichting gelöst ist.

Das Dichtelement 5 hat an seinem Innenumfang in der Mitte eine hineinragende Anschlagsicke 6 mit einander gegenüberliegenden Anschlagflächen 7, 8 für die Stirnenden der zu kuppelnden Rohre.

Das Dichtelement 5 hat weiter an beiden Seiten der Anschlagsicke 6 jeweils ein erstes und ein zweites Aufnahmeteil 9, 10 zum Aufnehmen eines Rohrendes, welche Aufnahmeteile 9, 10 in diesem Beispiel symmetrisch zu der Fläche der Anschlagsicke ausgeführt sind.

In dem gezeigten Beispiel sind die Aufnahmeteile 9, 10 an ihrem Innenumfang jeweils mit einer oder mehreren Klemmen und/oder Dichtlippen oder -Rillen 11, 11a, 12, 12a versehen, die klemmend und/oder dichtend an dem Aussenumfang des Rohrendes zur Anlage kommen.

Das erste Aufnahmeteil 9 und das zweite Aufnahmeteil 10 schließen jeweils über eine ringförmige Biegezone 13, 14 in solcher Weise an die Anschlagsicke 6 an, dass sich am Außenumfang des Dichtelements 5 in der Höhe der Mitte der Anschlagsicke 6 (in axiale Richtung gesehen) eine ringförmige Umfangsvertiefung 15 zwischen den Sollbiegezonen 13, 14 gebildet hat.

Diese Ausgestaltung des Anschlusses der Aufnahmeteile 9, 10 an die Anschlagsicke 6 ist so, dass beim Umkehren eines Aufnahmeteils 9, 10 die Biegung sich in ihrer Sollbiegezone 13, 14 konzentriert, und das betreffende Aufnahmeteil 9, 10 in axiale Richtung gesehen in gleicher Höhe, oder hinter der freien Anschlagfläche 7, 8 der Anschlagsicke 6 zu liegen kommt.

In Figur 2 ist ersichtlich, dass, in axiale Richtung des freien Endes eines Aufnahmeteils 9, 10 zur Anschlagrippe 6 hin gesehen - die zugehörige Sollbiegezone 13, 14 sich vorbei an der freien Anschlagfläche 7,8 der Anschlagrippe 6 befindet, was das vollständige Nachhintenfalten des betreffenden Aufnahmeteils gegenüber der freien Anschlagfläche fördert.

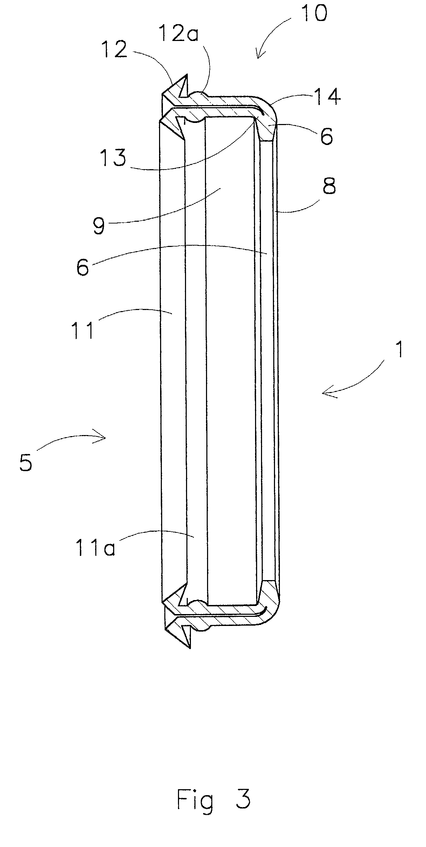

In der Figur 3 ist dargestellt, dass das Aufnahmeteil 10 mit der Innenseite nach außen gekehrt ist. In der Figur 3 ist nicht gezeigt, dass bereits ein Rohrende in das andere Aufnahmeteil 9 hineingeführt ist, was in der Praxis dadurch stattfinden kann, dass das Dichtelement über das Rohrende geschoben wird, bis die Anschlagsicke 6 die Stirnseite des Rohres berührt. Hierbei ist zuvor die Manschette 2 von dem Dichtelement entfernt worden. Nach Anordnung eines Rohrendes im Aufnahmeteil 9 und Entfernung der Manschette 2 wird anschließend das Aufnahmeteil 10 manuell met der Innenseite nach außen gekehrt, so dass dies über dem Außenumfang des Aufnahmeteils 9 zu liegen kommt.

Wie die Figur 3 zeigt, kann nun das andere Rohrende leicht an die freie Anschlagfläche 8 der Anschlagsicke 6 gestellt werden, wonach das Aufnahmeteil 10 wieder zurückgefaltet wird, so dass dies um das Ende des betreffenden Rohres zur Anlage kommt.

Schließlich wird die Manschette 2 um das Dichtelement 5 und die in diesem aufgenommenen Rohrenden gebracht und mit der Spanneinrichtung gespannt.

Es wird deutlich sein, dass bei der gezeigten Ausbildung auch das Aufnahmeteil 9 mit der Innenseite nach außen gefaltet werden könnte. Weiter wird deutlich sein, dass in einer nicht gezeigten Variante nur ein Aufnahmeteil mit zugehöriger bevorzugter Biegezone vorgesehen ist und das andere Aufnahmeteil des Einstecktyps ist.

Die Manschette 2 kann eine Profilierung statt der flachen, in Figur 1 gezeigten Ausführung aufweisen. Dabei kann die Ausgestaltung des Außenumfangs des Dichtelements an dieses Profil angepasst sein.

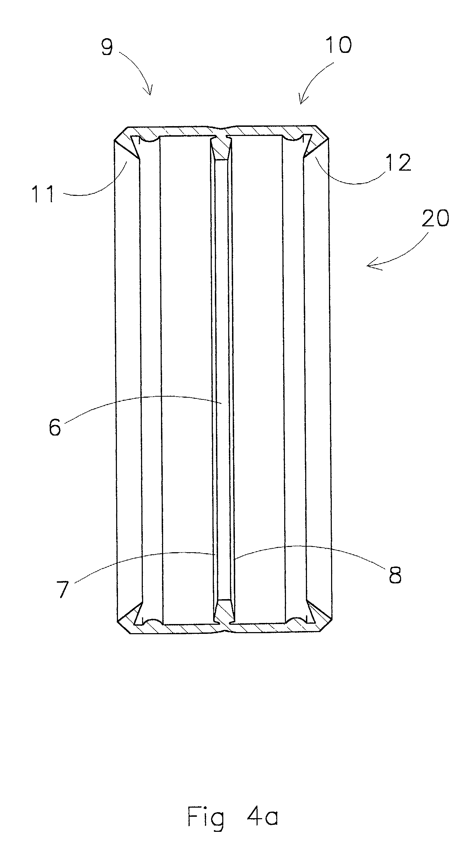

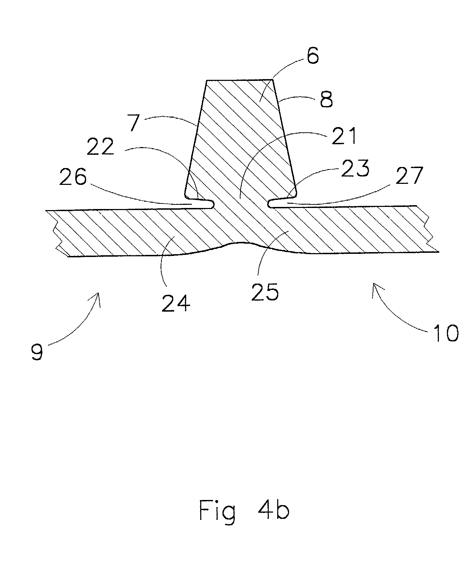

In den Figuren 4a,b ist das elastische Dichtelement 20 eines zweiten Ausführungbeispiels der erfindungsgemäßen Rohrkupplung gezeigt.

Teile des Dichtelements 20, die denen des Dichtelements 5 entsprechen, sind mit den gleichen Bezugsziffern versehen.

Wie ersichtlich in der Detaildarstellung der Figur 4b hat der Außenumfang der Anschlagsicke 6 einen Mittelbereich 21 und an seinen beiden Seiten einen Seitenrandbereich 22, 23. Die Sollbiegezonen 24,25 sind dadurch geschaffen, dass die Aufnahmeteile 9, 10 nur im Mittelbereich 21 unter der Bildung einer Spalte 26, 27 zwischen jedem der Seitenrandbereiche 22, 23 des Außenumfangs der Anschlagsicke und dem betreffenden Aufnahmeteil 9,10 an den Außenumfang der Anschlagsicke 6 anschließen. Hierdurch wird erreicht, dass beim Umkehren eines Aufnahmeteils 9,10 die Biegung sich in der neben der zugehörigen Spalte liegenden Sollbiegezone 24, 25 des Aufnahmeteils 9, 10 konzentriert. Das umgefaltete Aufnahmeteil 9, 10 kommt dann vollständig hinter der freien Anschlagfläche der Anschlagsicke zur Anlage.

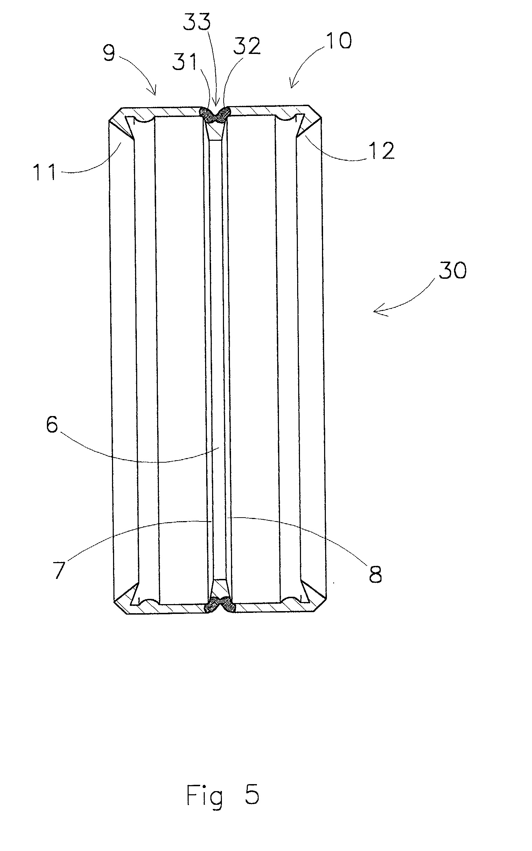

In figur 5 ist ein Dichtelement 30 eines dritten Ausführungsbeispiel der erfindungsgemäßen Rohrkupplung gezeigt.

Teile des Dichtelements 30, die denen des Dichtelements 5 entsprechen, sind mit den gleichen Bezugsziffern versehen.

Die Sollbiegezonen 31, 32 sind hier durch das Ausführen dieser Sollbiegezonen 31, 32 aus einem elastischen Material mit einer geringeren Steifheit als die übrigen Teile des Dichtelements 30 geschaffen. Vorzugweise kann ein derartiges Dichtelement 30 durch Koinjektion unterschiedlicher Kunststoffmaterialien in einer geeigneten Pressform erhalten werden. Außerdem ist hier eine Umfangsrille 33 an der Außenseite des Dichtelements 33 zwischen den beiden Sollbiegezonen31, 32 vorhanden.

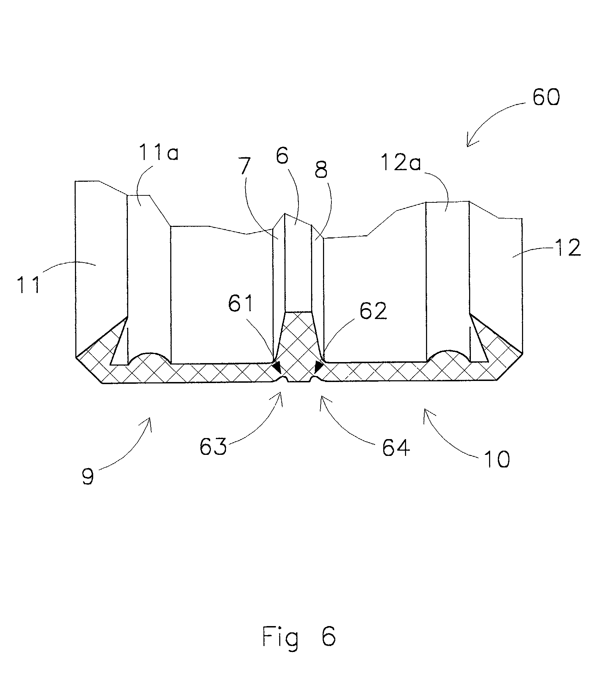

Figur 6 zeigt im Detail im Querschnitt eine bevorzugte Variante des Dichtelements 60 der erfindungsgemäßen Rohrkupplung. In der Figur 6 sind Teile, die den Teilen des Dichtelements gemäß den Figuren 1-3 entsprechen, mit den gleichen Bezugsziffern versehen.

In Figur 6 sind die Sollbiegezonen 61, 62 durch das Vorhandensein zweier ringförmiger Umfangsvertiefungen 63, 64 an dem Außenumfang des Dichtelements 60 in der Höhe der Anschlagsicke 6 geschaffen.

Die Vertiefungen 63, 64 liegen an beiden Seiten der Mittelebene der Anschlagsicke 6.

Beim Umkehren eines Aufnahmeteils 9,10 konzentriert sich die Biegung in der zugehörigen Sollbiegezone 61,62.

## Patentansprüche

1. Rohrkupplung (1) zum abdichtenden Verbinden zweier Rohrenden, insbesondere glattzylindrischer Rohrenden, zum Beispiel von geraden Rohren, Bogenstücken, T-Stücken, usw., welche Rohrkupplung umfasst:
- eine spannbare ringförmige Manschette (2), die an zumindestens einer Stelle geteilt ist,
- ein ringförmiges elastisches Dichtelement (5;20;30;60) um das die Manschette herumgespannt wird,
welches Dichtelement an seinem Innenumfang eine radial hineinragende Anschlagsicke (6) mit einander gegenüberliegenden Anschlagflächen (7,8) für die Rohrenden aufweist,
und welches Dichtelement weiter an beiden Seiten der Anschlagsicke jeweils ein erstes und ein zweites Aufnahmeteil (9,10) zum Aufnehmen eines Rohrendes aufweist,
- eine Spanneinrichtung zum Herumspannen der Manschette um die im Dichtelement aufgenommenen Rohrenden,
wobei die spannbare Manschette (2) leicht vom Dichtelement (5) entfernbar ist, und
wobei die Rohrkupplung (1) dadurch montierbar ist, dass die Manschette (2) vom Dichtelement (5;20;30;60) entfernt wird, danach ein Rohrende in das erste Aufnahmeteil (9,10) des Dichtelements hineingeführt, und dann das zweite Aufnahmeteil (10,9) mit der Innenseite nach außen gekehrt wird, in solcher Weise, dass das zweite Aufnahmeteil (10,9) über der Außenseite des ersten Aufnahmeteils (9,10) zu liegen kommt, danach das andere Rohrende in die Nähe der freien Anschlagfläche (8,7) der Anschlagsicke gebracht wird, und anschließend das umgekehrte zweite Aufnahmeteil (10,9) wieder zurückgefaltet wird, so dass dies um das betreffende Rohrende zur Anlage kommt, und schließlich die Manschette (2) um das Dichtelement (5) und die in diesem aufgenommenen Rohrenden gebracht, und mit der Spanneinrichtung gespannt wird.
**dadurch gekennzeichnet, daß** jedes Aufnahmeteil (9,10) über eine ringförmige Sollbiegezone (13,14;24,25;31,32;61,62) an die Anschlagsicke (6) anschließt, in solcher Weise, dass beim Umkehren eines Aufnahmeteils (9,10), dessen Biegung sich in der Sollbiegezone konzentriert, und das betreffende Aufnahmeteil (9,10) in axiale Richtung gesehen, in gleicher Höhe als, oder hinter der freien Anschlagfläche (7,8) der Anschlagsicke zu liegen kommt.

2. Rohrkupplung nach Anspruch 1, bei der die Sollbiegezonen (13,14;61,62) durch das Vorhandensein zumindestens einer ringförmiger Umfangsvertiefung (15;63,64) an dem Außenumfang des Dichtelements (5) in der Höhe der Anschlagsicke (6) geschaffen sind, in solcher Weise, dass beim Umkehren eines Aufnahmeteils (9,10) die Biegung sich in einer neben der Umfangsvertiefung (15;63,64) liegenden Sollbiegezone (13,14;61,62) des Aufnahmeteils (9,10) konzentriert.

3. Rohrkupplung nach Anspruch 1, bei der die Sollbiegezonen (61,62) durch das Vorhandensein zumindestens zweier nebeneinander liegender ringförmiger Umfangsvertiefungen (15;63,64) an dem Außenumfang des Dichtelements (5) in der Höhe der Anschlagsicke (6) geschaffen sind, in solcher Weise, dass beim Umkehren eines Aufnahmeteils (9,10) die Biegung sich in einer neben der Umfangsvertiefung (15;63,64) liegenden Sollbiegezone (61,62) des Aufnahmeteils (9,10) konzentriert.

4. Rohrkupplung nach Anspruch 1, bei der der Außenumfang der Anschlagsicke einen Mittelbereich (21) und an seinen beiden Seiten einen Seitenrandbereich (22,23) hat, und wobei die Sollbiegezonen (24,25) dadurch geschaffen sind, dass die Aufnahmeteile nur im Mittelbereich (21) unter der Bildung einer Spalte (26,27) zwischen jedem der Seitenrandbereiche des Außenumfangs der Anschlagsicke und dem betreffenden Aufnahmeteil (9,10) an den Außenumfang der Anschlagsicke (6) anschließen, in solcher Weise, dass beim Umkehren eines Aufnahmeteils (9,10), sich die Biegung in der neben der zugehörigen Spalte liegenden Sollbiegezone (24,25) des Aufnahmeteils (9,10) konzentriert.

5. Rohrkupplung nach einem oder mehreren der vorhergehenden Ansprüche, bei der die Sollbiegezonen(31,32) durch das Ausführen dieser Sollbiegezonen aus einem elastischen Material mit einer geringeren Steifheit als die übrigen Teile des Dichtelements geschaffen sind.

6. Rohrkupplung nach einem oder mehreren der vorhergehenden Ansprüche, bei der die Aufnahmeteile (9,10) an ihrem Außenumfang, zum Beispiel in der Nähe ihres freien Randes, jeweils mit einem Dicht- und/oder Klemmlippe oder -Rille (11,11a,12,12a) versehen sind.
